# EUROPEAN PATENT APPLICATION

(11) **EP 2 445 220 A2**
(43) Date of publication of application: **25.04.2012**
(21) Application number: 11166475.1
(22) Date of filing: 18.05.2011
(51) Int. Cl.: H04N 13/00, G02B 27/22

(54) **Shutter glasses for a stereoscopic image display system**

(30) Priority: 25.10.2010 KR 20100103791
(71) Applicant: Samsung Electronics Co., Ltd., Suwon-si, Gyeonggi-do (KR)
(72) Inventor: Koo, Jae-phil, Seoul (KR); Ha, Tae-hyeun, Gyeonggi-do (KR); Park, Jung-jin, Gyeonggi-do (KR); Choi, Nak-won, Incheon (KR)
(74) Representative: Bruce, Alexander Richard Henry

(57) **Abstract**

Shutter glasses for viewing a stereoscopic image and a display system including the same are provided. The shutter glasses include a left eye shutter and a right eye shutter and further include: a light receiving part which receives a control signal emitted from a display apparatus; an optical element which is disposed to face the light receiving part and changes a traveling path of light incident on the optical element such that light emitted from the display apparatus is incident on the light receiving part and light emitted from a source other than the display apparatus is not incident on the light receiving part; and a control part which controls opening/closing of the left eye shutter and the right eye shutter based on the control signal received by the light receiving part.

## Description

The present invention relates to shutter glasses for stereoscopic images and a display system having the same, and more particularly, to shutter glasses for stereoscopic images, which are configured to increase a light signal reception rate, and a display system having the same.

With advances in technology, display apparatuses having a structure to provide stereoscopic (or three-dimensional (3D)) images are developing and spreading. Unlike a two-dimensional (2D) image signal, a stereoscopic image signal is separated into two components (i.e., images) which are respectively displayed for the left and right eyes of a user.

In order for the user to view the two component images as a stereoscopic image, shutter glasses are being developed to allow the user to view the left eye image and the right eye image alternately. A left eye shutter and a right eye shutter of the shutter glasses are controlled to be opened/closed based on a synchronization signal received from a display apparatus.

In this regard, when an indoor light source, such as a fluorescent lamp, an incandescent lamp or the like, illuminates a space where the user views the stereoscopic image, external light from such an indoor light source may act as noise to the shutter glasses if it is received by a signal receiving part of the shutter glasses.

In addition, if the signal sensitivity of the shutter glasses synchronization signal transmitted from a display apparatus is low, the signal receiving part of the shutter glasses may not detect the received synchronization signal. This may cause the shutter opening/closing of the shutter glasses to malfunction.

One or more exemplary embodiments provide shutter glasses which condense a synchronization signal incident on the front of the shutter glasses among light incident on the shutter glasses onto a signal receiving part of shutter glasses, while refracting external light incident in an oblique fashion, thereby improving reception signal efficiency and eliminating interference due to the external light, and a display system employing the shutter glasses.

According to an aspect of an exemplary embodiment, there is provided shutter glasses for a stereoscopic image, including a left eye shutter; a right eye shutter; a light receiving part which receives a control signal emitted from a display apparatus; an optical element which is disposed to face the light receiving part and changes a traveling path of incident light such that light emitted from the display apparatus is incident into the light receiving part and external light incident from the surroundings of the display apparatus is directed away from the light receiving part; and a control part which controls opening/closing of the left eye shutter and the right eye shutter based on the control signal received by the light receiving part.

The optical element may include: a window to cover the light receiving part and transmit light to the light receiving part; and a condensing part which is formed on at least one surface of the window and is configured such that the light emitted from the display apparatus is condensed into the light receiving part and the external light emitted from the surroundings of the display apparatus is refracted away from the light receiving part.

The condensing part may include at least one of a Fresnel lens, a plane convex lens, a biconvex lens and a meniscus lens.

The optical element may include a condensing part to cover the light receiving part and is configured such that the light emitted from the display apparatus is condensed into the light receiving part and the external light emitted from the surroundings of the display apparatus is refracted away from the light receiving part.

The optical element may include: a light shielding part which is disposed to shield incident light; and a condensing part which is provided in the light shielding part and is configured such that the light emitted from the display apparatus is condensed into the light receiving part and the external light emitted from the surroundings of the display apparatus is refracted away from the light receiving part. The light shielding part and the condensing part may be integrally formed by dual injection molding.

The control signal may be a synchronization signal that controls opening/closing of the left eye shutter and the right eye shutter.

The light receiving part may include a light receiving element which receives incident light, and a condensing lens which condenses light incident into the light receiving element, and the optical element may be configured such that an optical axis of the condensing part is separated by a predetermined distance from an optical axis of the condensing lens. The optical element may be configured such that the optical axis of the condensing part is separated by a predetermined distance downward from the optical axis of the condensing lens, and external light emitted from above the display apparatus is directed away from the light receiving element.

According to an aspect of another exemplary embodiment, there is provided a display system including: a display apparatus including a display part which displays a stereoscopic image including a left eye image and a right eye image, peripheral devices, and a light transceiving part which transmits/receives light for a control signal; and the above-described shutter glasses for stereoscopic image.

The above and/or other aspects will become apparent and more readily appreciated from the following description of exemplary embodiments, taken in conjunction with the accompanying drawings, in which:
FIG. 1 is a schematic perspective view showing a display system according to an exemplary embodiment;
FIG. 2 is a control block diagram of the display system of FIG. 1;
FIG. 3 is a schematic view showing an arrangement of optical elements and a light receiving part of shutter glasses for a stereoscopic image according to an exemplary embodiment;
FIGs. 4A and 4B are schematic views showing an arrangements of optical elements and a light receiving part of shutter glasses for a stereoscopic image according to an exemplary embodiment;
FIG. 5 is a schematic view showing an arrangement of optical elements and a light receiving part of shutter glasses for a stereoscopic image according to an exemplary embodiment;
FIG. 6 is a schematic view showing an arrangement of optical elements and a light receiving part of shutter glasses for a stereoscopic image according to an exemplary embodiment; and
FIG. 7 is a schematic view showing an arrangement of optical elements and a light receiving part of shutter glasses for a stereoscopic image according to an exemplary embodiment.

Below, exemplary embodiments will be described in detail with reference to accompanying drawings so as to be easily realized by a person having ordinary knowledge in the art.

The exemplary embodiments may be embodied in various forms without being limited to the exemplary embodiments set forth herein. Descriptions of well-known parts are omitted for clarity, and like reference numerals refer to like elements throughout.

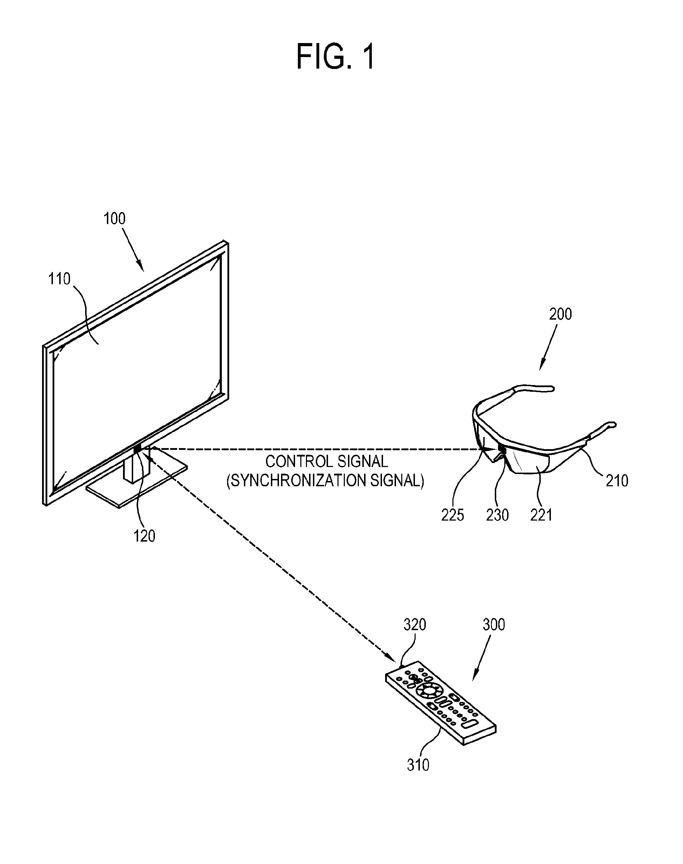

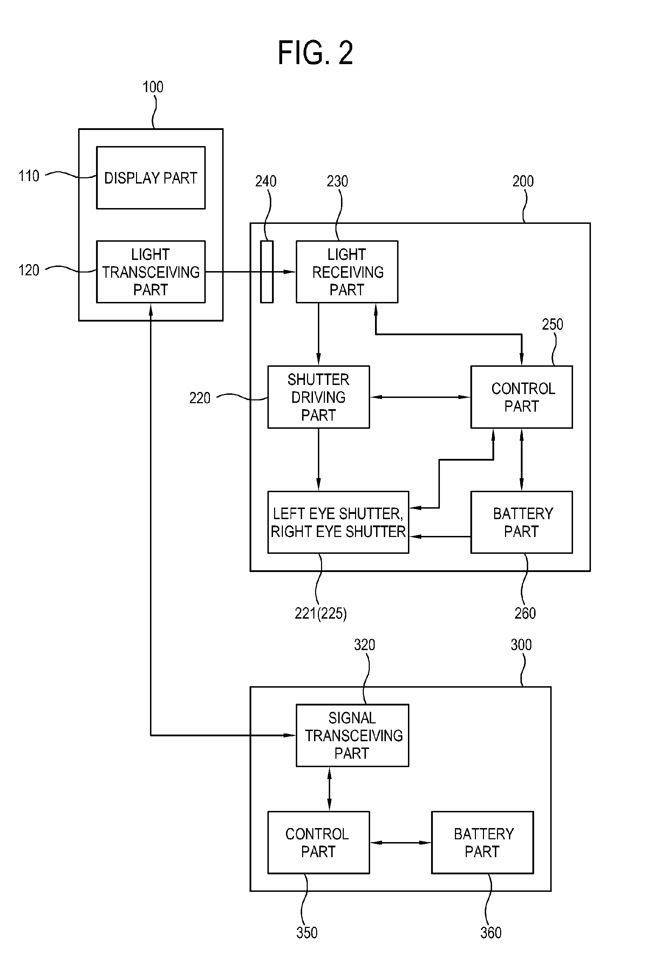

FIG. 1 is a schematic perspective view showing a display system according to an exemplary embodiment, and FIG. 2 is a control block diagram of the display system of FIG. 1.

Referring to FIG. 1 and FIG. 2, a display system according to an exemplary embodiment may include a display apparatus 100 and shutter glasses 200. The display system according to the exemplary embodiment may further include a wireless control terminal 300.

The display apparatus 100 displays a stereoscopic image composed of a left eye image and a right eye image. The shutter glasses 200 include a glasses body 210 and left and right eye shutters 221 and 225 which are disposed in the glasses body 210 and are opened/closed in synchronization with the left eye image and the right eye image, respectively, displayed on the display apparatus 100. The left eye shutter 221 is closed when the right eye image is to be displayed on the display apparatus 100 and is opened when the left eye image is displayed on the display apparatus 100. That is, the left eye shutter 221 shields the right eye image while transmitting the left eye image. The right eye shutter 225 works in reverse to the left eye shutter 221. That is, the right eye shutter 225 shields the left eye image while transmitting the right eye image.

The display apparatus 100 displays the left eye image and the right eye image separately for each frame. A user who wears the shutter glasses 200 may visually perceive the images, which are separated through the opening/closing of the left eye shutter 221 and the right eye shutter 225, as the stereoscopic image. The display apparatus 100 includes a display part 110 which displays an image, peripheral devices, and a light transceiving part 120 which emits and receiving light for a control signal. The display apparatus 100 may be implemented by a portable terminal such as a television, a monitor, a mobile phone and the like, which are capable of receiving and displaying a 3D image signal from an image source.

In addition, the display apparatus 100 may further include an image signal receiving part (not shown) which receives an image signal from an image source, an image signal processing part (not shown) which processes the received image signal, etc.

The display part 110 displays an image based on the processed image signal. The display unit 110 may include a liquid crystal panel including a liquid crystal layer, an organic light emitting panel including a light emitting layer made of organic material, a plasma display panel, or the like, and a panel driving part which drives the above panels.

The light transceiving part 120 generates light for a synchronization signal and transmits it to the shutter glasses 200 so that the left eye shutter 221 and the right eye shutter 225 of the shutter glasses 200 can be opened/closed in synchronization with an image displayed on the display part 110. The synchronization signal light may be transmitted every two frames, or may be transmitted every one frame. In addition, the light transceiving part 120 receives control signal light from the wireless control terminal 300.

The wireless control terminal 300 includes a terminal body 310 and a signal transceiving part 320 which is disposed in the terminal body 310 and transmits a control signal to the light transceiving part 120 of the display apparatus 100. In addition, the wireless control terminal 300 may further include a control part 350 which controls the signal transceiving part 320 and a battery part 360 which supplies power to the wireless control terminal 300. In this exemplary embodiment, the signal transceiving part 320 may include an infrared transmitter which transmits infrared light for infrared communication with the light transceiving part 120.

The shutter glasses 200 include a light receiving part 230, an optical element 240 and a control part 250 which controls the light receiving part 230 and the optical element 240, which are disposed in the glasses body 210. The control part 250 also controls the glasses body 210, the left eye shutter 221 and the right eye shutter 225. In addition, the shutter glasses 200 may further include a shutter driving part 220 which drives the left eye shutter 221 and the right eye shutter 225, and a battery part 260.

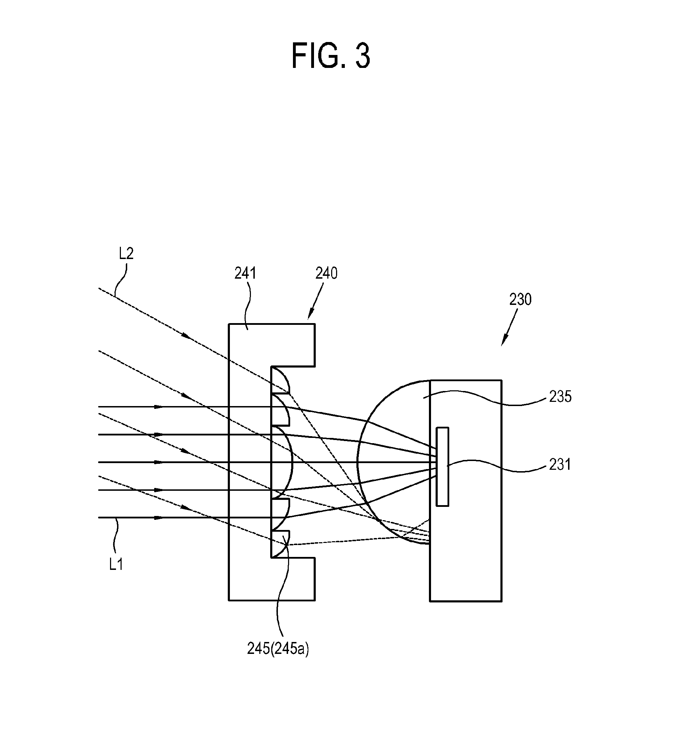

Referring to FIG. 3, the light receiving part 230 receives a control signal light from the display apparatus 100 and converts the received control signal light into a control signal which is then output to the shutter driving part 220. According to an exemplary embodiment, the control signal may be a synchronization signal for controlling the left eye shutter 221 and the right eye shutter 225. The light receiving part 230 includes a light receiving element 231 which receives incident light, and a condensing lens 235 which condenses incident light into the light receiving element 231. According to an exemplary embodiment, the light receiving element 231 may include an infrared receiver which receives infrared light having a wavelength range from 790 nm to 890 nm.

The shutter driving part 220 performs an auto gain control process with respect to the synchronization signal input thereto to drive the left eye shutter 221 and the right eye shutter 225. The shutter driving part 220 may divide a frequency of the synchronization signal and delay the frequency-divided synchronization signal or change its phase. The left eye shutter 221 and the right eye shutter 225 may be liquid crystal shutter glasses and are opened/closed by the shutter driving part 220.

As shown in FIG. 3, the condensing lens 235 is disposed on the light receiving element 231 and improves signal sensitivity by condensing the incident light into the light receiving element 231. Meanwhile, the condensing lens 235 condenses external light, including light from an external light source such as a fluorescent lamp, an incandescent lamp, an LED lamp or the like, in addition to the above-mentioned synchronization signal light. This may increase the intensity of noise due the external light.

The optical element 240 is disposed to be opposite to the light receiving part 230 to prevent the external light from being condensed by the condensing lens 235. That is, the optical element 240 changes a traveling path of incident light such that light L1 emitted from the display apparatus 100 is condensed by the condensing lens 235 into the light receiving part 230 and external light L2, which is obliquely incident from the surroundings of the display apparatus 100, is directed away from the light receiving part 230.

Referring to FIG. 3 again, according to an exemplary embodiment, the optical element 240 may include a window 241 which is disposed at a predetermined position with respect to the glasses body (210 in FIG. 1) to cover the light receiving part 230, and a condensing part 245 which is formed on at least one surface of the window 241. The window 241 covering the light receiving part 230 transmits the light L1 and L2 emitted toward the light receiving part 230. The condensing part 245 condenses the light L1 emitted from the display apparatus (100 in FIG. 1) to the light receiving element 231 and refracts the external light L2 emitted from the surroundings of the display apparatus so as to not be incident on the light receiving element 231. FIG. 3 illustrates a Fresnel lens 245a as the condensing part 245, which has a positive refractive index formed on one surface of the window 241 opposing the condensing lens 235, i.e., a light output surface. According to an exemplary embodiment, the Fresnel lens 245a and the condensing lens 235 are coaxially disposed, and the light L1 emitted from the display apparatus (100 in FIG. 1) is incident in parallel to the optical axis of the Fresnel lens 245a. Thus, the light L1 is condensed by the Fresnel lens 245a and the condensing lens 235 into the light receiving element 231. On the other hand, the external light L2 incident from the surroundings of the display apparatus 100 is refracted and condensed so as to not be incident on the light receiving element 231 since the light L2 is incident obliquely to the optical axis of the Fresnel lens 245a. Thus, signal interference due to the external light L2 can be eliminated. In this exemplary embodiment, the Fresnel lens 245a is not limited to being formed on the light output surface of the window 241, but may be formed on the other surface of the window 241, i.e., a light incident surface, or both of the light incident surface and the light output surface.

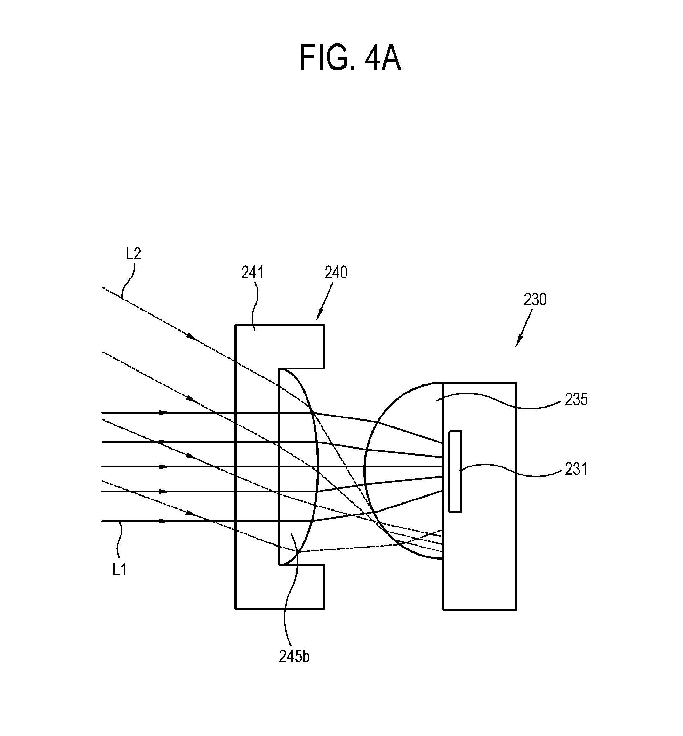

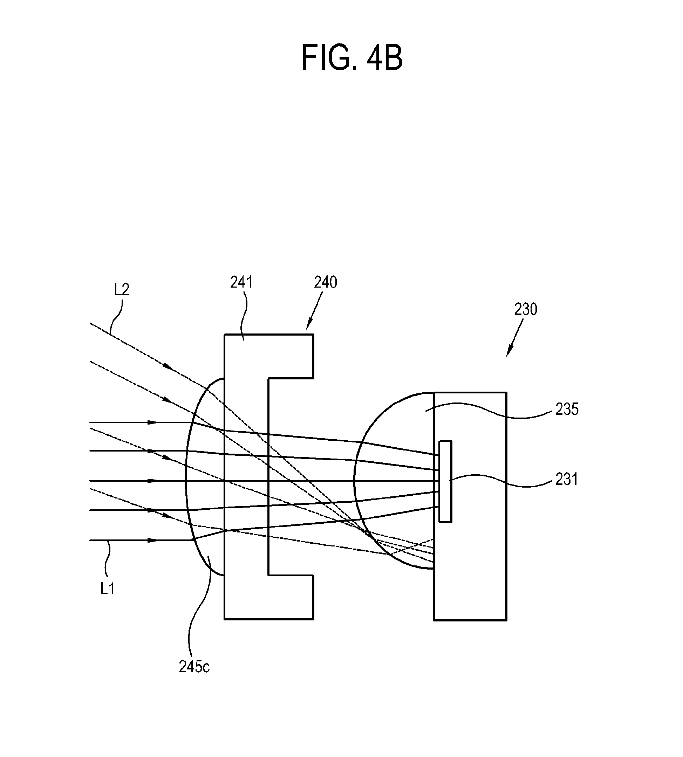

According to an exemplary embodiment, the condensing part 245 may be configured by plane convex lenses 245b and 245c as shown in FIGs. 4A and 4B, respectively. FIG. 4A illustrates a plane convex lens 245b formed on the light output surface of the window 241 and FIG. 4B illustrates a plane convex lens 245c formed on the light incident surface of the window 241. In addition, in configuring the condensing part 245, the plane convex lenses 245b and 245c may be formed on the light incident surface and the light output surface, respectively. In addition, the condensing part 245 may be configured by a biconvex lens or a meniscus lens having a positive refractive index.

While it has been illustrated in this exemplary embodiment that is configured by a single lens, the condensing lens 245 is not limited thereto but may be configured by two or more compound lenses.

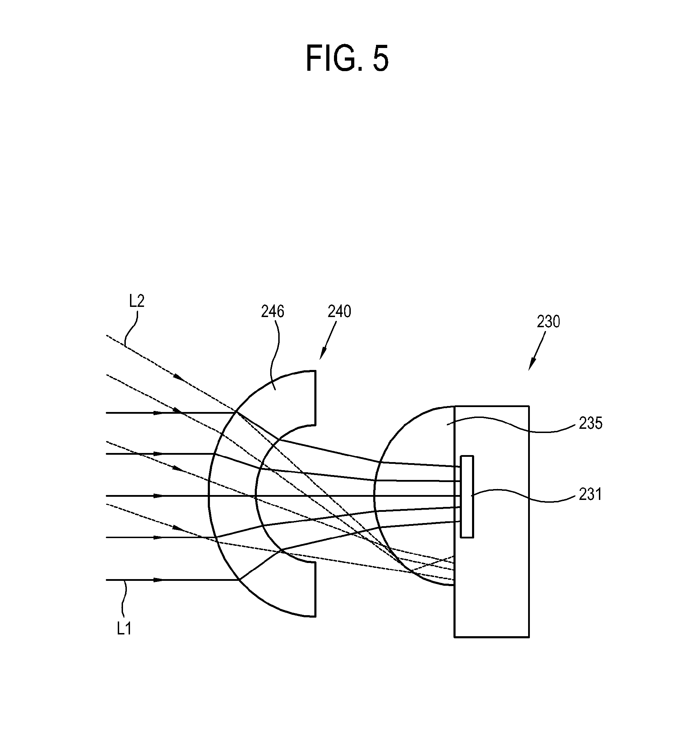

Referring to FIG. 5 now, according to an exemplary embodiment, the optical element 240 includes a condensing part 246 which is disposed at a predetermined position with respect to the glasses body (210 in FIG. 1) to cover the light receiving part 230. The condensing part 246 is a lens having a positive refractive index which is configured such that the light L1 emitted from the display apparatus (100 in FIG. 1) is condensed into the light receiving element 231 and the external light L2 incident obliquely to the optical axis of the condensing part 246 from the surroundings of the display apparatus is refracted so as to not be incident on the light receiving element 231. While FIG. 5 illustrates a lens including a light incident surface having a positive refractive index and a light output surface having a negative refractive index, as one example of the condensing part 246, the condensing part 246 is not limited thereto and may be modified in various ways within a range of lenses having a positive refractive index.

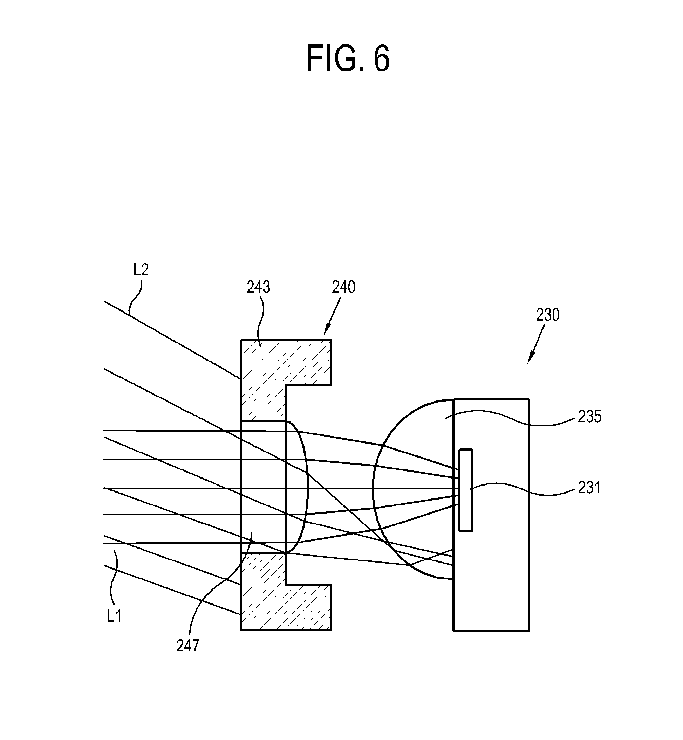

Referring to FIG. 6 now, according to an exemplary embodiment, the optical element 240 includes a light shielding part 243 and a condensing part 247 which are disposed at predetermined positions with respect to the glasses body (210 in FIG. 1). The light shielding part 243 covers the light receiving part 230 and shields light that is incident outside of the condensing part 247. The condensing part 247 is provided in the light shielding part 243 and is configured such that the light L1 emitted from the display apparatus 100 is condensed into the light receiving element 231 and the external light L2 incident obliquely to the optical axis of the condensing part 247 from the surroundings of the display apparatus is refracted so as to not be incident on the light receiving element 231. According to an exemplary embodiment, the light shielding part 243 and the condensing part 247 may be formed by combining separate members or may be integrally formed by dual injection molding.

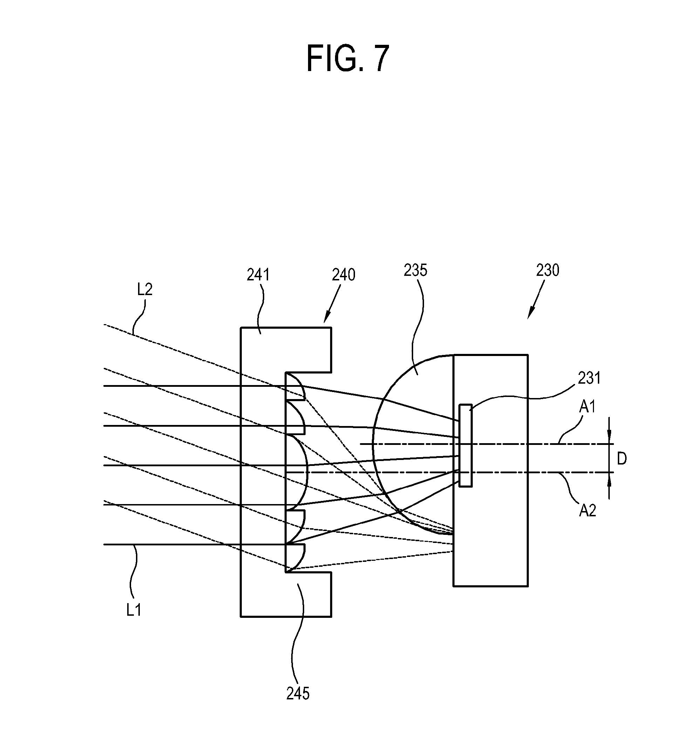

Referring to FIG. 7 now, in the optical element 240 according to an exemplary embodiment, an optical axis A2 of the condensing part 245 may be set to be separated by a predetermined distance D from an optical axis A1 of the condensing lens 235. As shown in FIG. 7, the optical element 240 may be disposed such that the optical axis A2 of the condensing part 245 is separated by the predetermined distance D downward from the optical axis A1 of the condensing lens 235. This is because in many cases, external light sources located near the location where the display apparatus is installed are set to be higher than the display apparatus 100. When the optical element 240 is arranged in this manner, external light emitted from above the display apparatus is guided so as not to be incident on the light receiving element.

In the shutter glasses and the display system employing the shutter glasses according to the exemplary embodiments, signal interference due to external light can be reduced or eliminated by including an optical element to guide the external light, which is incident obliquely to an optical axis of the optical element, so as to not be incident on a light receiving element. Accordingly, external light interference can be minimized, thereby preventing the shutter glasses and the display apparatus from malfunctioning.

Although a few exemplary embodiments have been shown and described, it will be appreciated by those skilled in the art that changes may be made in these exemplary embodiments without departing from the principles of the inventive concept, the scope of which is defined in the appended claims.

## Claims

1. Shutter glasses for viewing a stereoscopic image, the shutter glasses comprising:
a left eye shutter;
a right eye shutter;
a light receiving part which receives a control signal emitted from a display apparatus;
an optical element which is disposed to face the light receiving part and change a travelling path of light incident on the optical element such that light emitted from the display apparatus is incident on the light receiving part and light emitted from a source other than the display apparatus is not incident on the light receiving part; and
a control part which controls opening and closing of the left eye shutter and the right eye shutter based on the control signal received by the light receiving part.

2. The shutter glasses according to claim 1, wherein the optical element comprises:
a window which is disposed to cover the light receiving part and transmits the light incident on the optical element to the light receiving part; and
a condensing part which is disposed on at least one surface of the window and is configured such that the light emitted from the display apparatus is condensed to be incident on the light receiving part and the light emitted from a source other than the display apparatus is refracted to not be incident on the light receiving part.

3. The shutter glasses according to claim 2, wherein the condensing part comprises at least one of a Fresnel lens, a plane convex lens, a biconvex lens and a meniscus lens.

4. The shutter glasses according to claim 2, wherein the condensing part comprises a first lens disposed on a first surface of the window on which light is incident, and a second lens disposed on a second surface of the window through which condensed light is output.

5. The shutter glasses according to claim 1, wherein the optical element comprises a condensing part which is disposed to cover the light receiving part and is configured such that the light emitted from the display apparatus is condensed to be incident on the light receiving part and the light emitted from a source other than the display apparatus is refracted to not be incident on the light receiving part.

6. The shutter glasses according to claim 5, wherein the condensing part is a lens having a positive refractive index.

7. The shutter glasses according to claim 1, wherein the optical element comprises:
a light shielding part which is disposed to shield incident light; and
a condensing part which is disposed in the light shielding part and is configured such that the light emitted from the display apparatus is condensed to be incident on the light receiving part and the light emitted from a source other than the display apparatus is refracted to not be incident on the light receiving part.

8. The shutter glasses according to claim 7, wherein the light shielding part and the condensing part are integrally formed by dual injection molding.

9. The shutter glasses as claimed in any one of claims 1 to 8, wherein the control signal is a synchronization signal that controls opening and closing of the left eye shutter and the right eye shutter.

10. The shutter glasses as claimed in any one of claims 2 to 9, wherein the light receiving part comprises a light receiving element which receives incident light, and a condensing lens which condenses light incident on the condensing lens to be incident on the light receiving element, and
wherein the optical element is configured such that an optical axis of the condensing part is separated by a predetermined distance from an optical axis of the condensing lens.

11. The shutter glasses according to claim 10, wherein the optical element is configured such that the optical axis of the condensing part is separated by a predetermined distance below the optical axis of the condensing lens, and light emitted from above the display apparatus is directed so as not to be incident on the light receiving element.

12. A display system comprising:
a display apparatus including a display part which displays a stereoscopic image including a left eye image and a right eye image, and a light transceiving part which transmits and receives light for a control signal; and
shutter glasses as claimed in any one of claims 1 to 11.
